# EUROPEAN PATENT APPLICATION

(11) **EP 4 650 738 A1**
(43) Date of publication of application: **19.11.2025**
(21) Application number: 24741606.8
(22) Date of filing: 08.03.2024
(51) Int. Cl.: G01L 3/10

(54) **TORQUE SENSOR**

(30) Priority: 12.01.2023 JP 2023003116
(71) Applicant: NSK Steering & Control, Inc., Tokyo, 141-0032 (JP)
(72) Inventor: NAKAMURA, Akinobu, Maebashi-shi, Gunma 371-8527 (JP)
(74) Representative: SSM Sandmair
(86) International application number: PCT/JP2024/009062
(87) International publication number: WO 2024/150834

(57) **Abstract**

In order to set the positional relationship between a stator and a magnetic collection yoke to a desired positional relationship, a torque sensor 10 includes a stator 60 fixed to a first pinion gear 88a, and a magnetic collection yoke assembly 40 including a magnetic collection yoke 46 that is disposed so as to overlap a flange portion 61 of the stator 60 and detects a change in magnetic flux according to a relative positional change between the stator 60 and a magnet 65, and is attached to a housing 20, the magnetic collection yoke assembly 40 includes a plurality of movement restriction protrusions 44 facing an inner wall 25 of a storage portion 24 included in the housing 20, two movement restriction protrusions 44 of the plurality of movement restriction protrusions 44 are disposed apart from each other in at least one direction of a length direction Y and a width direction X, two movement restriction protrusions 44 of the plurality of movement restriction protrusions 44 are disposed apart from each other in the other direction, or at least one movement restriction protrusion 44 extends longer in the other direction than in the one direction.

## Description

### Field

The present disclosure relates to a torque sensor.

### Background

As an example of a torque sensor that detects a torque applied to a rotational body included in a steering device, there is a torque sensor that detects a torque by detecting a change in magnetism. For example, a magnetic detection module described in Patent Literature 1 includes a multipole magnet fixed to an input shaft, a set of yokes fixed to an output shaft, a magnetic flux guide member that guides a magnetic flux of a magnetic circuit to a magnetic sensor, and the magnetic sensor that detects the magnetic flux guided by the magnetic flux guide member and converts the magnetic flux into a voltage signal.

In addition, Patent Literature 1 describes an embodiment in which a sensor unit that accommodates a magnetic sensor is provided to protrude from a tip surface of a cylindrical portion, and the cylindrical portion is inserted into a mounting hole of a housing, whereby the magnetic detection module is attached to the housing. Further, Patent Literature 1 describes that a one-sided fitting gap between the mounting hole of the housing and the cylindrical portion is set to be smaller than a minimum gap between a ring portion of the yoke and the sensor unit.

### Citation List

### Patent Literature

Patent Literature 1: Japanese Laid-open Patent Publication No. 2020-8547

### Summary

### Technical Problem

Here, in Patent Literature 1, the O-ring used as the sealing material is interposed between the mounting hole of the housing and the cylindrical portion inserted into the mounting hole. The O-ring has elasticity, and the O-ring is in a compressed state when the cylindrical portion is inserted into the mounting hole of the housing. Therefore, when the O-ring having elasticity is interposed between the cylindrical portion provided with the sensor unit and the mounting hole of the housing, the positional relationship of the cylindrical portion with respect to the mounting hole changes depending on the degree of compression of the O-ring, and the positional relationship with respect to the housing changes. Accordingly, when the O-ring is interposed between the cylindrical portion provided with the sensor unit and the housing, the gap between the ring portion of the yoke and the sensor unit changes depending on the degree of compression of the O-ring.

On the other hand, in a torque sensor, when the distance between a magnetic collection yoke that is a magnetic flux guide member and a stator that transmits the magnetic flux from the multipole magnet to the magnetic collection yoke changes with respect to the design distance, the output characteristic when the torque sensor detects the torque changes. Therefore, by disposing an elastic member such as an O-ring between an assembly in which the magnetic collection yoke is disposed and a housing to which the assembly is attached, when the distance between the magnetic collection yoke and the stator changes depending on the degree of compression of the O-ring, the output characteristic from the torque sensor easily changes, and an individual difference occurs in the output characteristic. For these reasons, there is room for improvement from the viewpoint of positioning when the assembly of the magnetic collection yoke is attached to the housing.

The present disclosure has been made in view of the above, and an object is to provide a torque sensor capable of setting a positional relationship between a stator and a magnetic collection yoke to a desired positional relationship.

### Solution to Problem

A torque sensor according to the present disclosure includes: a housing; a shaft that is disposed inside the housing; a pair of stators that includes a flange portion protruding to an outer side in a radial direction of the shaft and is fixed to the shaft; a magnet having a cylindrical shape, the magnet being disposed to face the stators; and a magnetic collection yoke assembly including a pair of magnetic collection yokes, disposed to overlap the flange portion of the stators with a gap in an axial direction of the shaft, for detecting a change in magnetic flux according to a relative positional change between the pair of the stators and the magnet, and a Hall element outputting the change in magnetic flux detected by the magnetic collection yoke as an electric signal, and the magnetic collection yoke assembly being detachably attached to the housing. Further, the housing includes a storage portion storing the magnetic collection yoke assembly, the magnetic collection yoke assembly includes a plurality of movement restriction protrusions facing an inner wall of the storage portion, a plurality of the movement restriction protrusions is disposed on each of both surfaces of the magnetic collection yoke assembly in the axial direction, two movement restriction protrusions among a plurality of the movement restriction protrusions are disposed to be separated from each other in at least one direction of a length direction along the radial direction and a width direction that is a direction orthogonal to both the length direction and the axial direction on each of both surfaces of the magnetic collection yoke assembly in the axial direction, and two movement restriction protrusions among a plurality of the movement restriction protrusions are disposed to be separated from each other in another direction, or at least one movement restriction protrusion of a plurality of the movement restriction protrusions extends longer in the another direction than in the one direction.

With this configuration, when a magnetic collection yoke assembly is stored in a storage portion, movement restriction protrusions abut on an inner wall of the storage portion, whereby the position in an axial direction with respect to a housing is restricted, and the magnetic collection yoke assembly is fixed in a desired positional relationship with respect to the housing. In addition, the plurality of movement restriction protrusions is disposed on both surfaces of the magnetic collection yoke assembly in the axial direction, and two movement restriction protrusions of the plurality of movement restriction protrusions are disposed to be separated from each other in at least one direction of a length direction and a width direction. In addition, the two movement restriction protrusions of the plurality of movement restriction protrusions are disposed to be separated from each other in the other direction, or at least one movement restriction protrusion of the plurality of movement restriction protrusions extends longer in the other direction than in the one direction. Therefore, when the magnetic collection yoke assembly is stored in the storage portion, the movement restriction protrusions abut on the inner wall of the storage portion, and therefore, the magnetic collection yoke assembly is fixed to the housing with an attachment angle of the magnetic collection yoke assembly with respect to the housing being also at a desired attachment angle. Thus, the magnetic collection yoke included in the magnetic collection yoke assembly can be fixed to the housing in a desired positional relationship, and the magnetic collection yoke assembly can be disposed in a desired positional relationship with respect to a stator fixed to a shaft. As a result, the positional relationship between the stator and the magnetic collection yoke can be set to a desired positional relationship.

In a preferable form, the magnetic collection yoke assembly includes a magnetic collection yoke accommodation portion that accommodates the magnetic collection yoke, and the movement restriction protrusions are disposed on the magnetic collection yoke accommodation portion.

With this configuration, when the magnetic collection yoke assembly is stored in the storage portion included in the housing, a magnetic collection yoke accommodation portion that accommodates the magnetic collection yoke can be positioned with respect to the housing. Thus, the magnetic collection yoke assembly fixed to the housing can dispose the magnetic collection yoke accommodated in the magnetic collection yoke accommodation portion in an appropriate positional relationship with respect to the stator. As a result, the positional relationship between the stator and the magnetic collection yoke can be set to a desired positional relationship.

In a preferable form, the movement restriction protrusions are disposed to include regions at both ends in the length direction and regions at both ends in the width direction on both surfaces of the magnetic collection yoke accommodation portion in the axial direction.

With this configuration, the movement restriction protrusions are disposed so as to include four corner regions on each of both surfaces of the magnetic collection yoke accommodation portion in the axial direction. Therefore, when the magnetic collection yoke assembly is stored in the storage portion included in the housing, the movement restriction protrusions at the four corners of the magnetic collection yoke accommodation portion abut on the inner wall of the storage portion, whereby the magnetic collection yoke assembly can position the magnetic collection yoke accommodation portion at an appropriate position. Thus, the magnetic collection yoke assembly stored in the storage portion can dispose the magnetic collection yoke accommodated in the magnetic collection yoke accommodation portion in an appropriate positional relationship with respect to the stator. As a result, the positional relationship between the stator and the magnetic collection yoke can be set to a desired positional relationship.

In a preferable form, on the magnetic collection yoke assembly, a sealing member that abuts on the inner wall of the storage portion is disposed on an outer side of the magnetic collection yoke accommodation portion in the radial direction.

With this configuration, in the magnetic collection yoke assembly, a sealing member abutting on the inner wall of the storage portion is disposed on a radially outer side of the magnetic collection yoke accommodation portion, and therefore it is possible to suppress the entry of water or the like into the storage portion from the outside of the housing. In addition, since the magnetic collection yoke assembly includes the plurality of movement restriction protrusions, even when the sealing member abutting on the inner wall of the storage portion is disposed on the magnetic collection yoke assembly, the magnetic collection yoke assembly can be positioned at an appropriate position by the movement restriction protrusions regardless of the degree of compression of the sealing member when the magnetic collection yoke assembly is stored in the storage portion. Thus, the magnetic collection yoke assembly stored in the storage portion can dispose the magnetic collection yoke accommodated in the magnetic collection yoke accommodation portion in an appropriate positional relationship with respect to the stator while suppressing entry of water or the like into the storage portion from the outside of housing with the sealing member. As a result, the positional relationship between the stator and the magnetic collection yoke can be set to a desired positional relationship.

In a preferable form, a plurality of the movement restriction protrusions disposed on both surfaces of the magnetic collection yoke assembly is disposed to be separated from each other at least in the length direction on each surface, the magnetic collection yoke assembly includes a lid that covers an opening of the magnetic collection yoke accommodation portion formed on each of both sides of the magnetic collection yoke accommodation portion in the axial direction, and the lid is disposed between the movement restriction protrusions separated from each other in the length direction.

With this configuration, in the magnetic collection yoke assembly, the movement restriction protrusions facing the inner wall of the storage portion can be disposed on both surfaces of the magnetic collection yoke assembly in the axial direction while dust-proofness with respect to the magnetic collection yoke is secured by a lid. Thus, the magnetic collection yoke assembly stored in the storage portion can dispose the magnetic collection yoke accommodated in the magnetic collection yoke accommodation portion in an appropriate positional relationship with respect to the stator while ensuring dust-proofness of the magnetic collection yoke accommodation portion. As a result, the positional relationship between the stator and the magnetic collection yoke can be set to a desired positional relationship.

In a preferable form, at least some movement restriction protrusions of a plurality of the movement restriction protrusions face the inner wall while being separated from the inner wall of the storage portion, and a maximum value of a distance H1 between the movement restriction protrusion and the inner wall is narrower than a distance H2 between the flange portion of the stators and the magnetic collection yoke.

With this configuration, when the magnetic collection yoke assembly is stored in the storage portion of the housing, even when the movement restriction protrusions abut on the inner wall of the storage portion, the magnetic collection yoke assembly can secure the distance between flange portions of the stator and the magnetic collection yoke in the axial direction. Thus, in the magnetic collection yoke assembly stored in the storage portion, the position of the magnetic collection yoke in the axial direction with respect to the housing can be located at an appropriate position, and the magnetic collection yoke can be disposed in an appropriate positional relationship with respect to the stator. As a result, the positional relationship between the stator and the magnetic collection yoke can be set to a desired positional relationship.

In a preferable form, all the movement restriction protrusions of a plurality of the movement restriction protrusions abut on the inner wall of the storage portion.

With this configuration, when the magnetic collection yoke assembly is stored in the storage portion, all the movement restriction protrusions included in the magnetic collection yoke assembly abut on the inner wall of the storage portion, so that the magnetic collection yoke assembly can be disposed with positional accuracy in the axial direction with respect to the housing being high accuracy. Thus, the magnetic collection yoke can be disposed in an appropriate positional relationship with respect to the stator, and the positional relationship between the stator and the magnetic collection yoke can be set to a desired positional relationship.

### Advantageous Effects of Invention

The torque sensor according to the present disclosure has an effect that the positional relationship between the stator and the magnetic collection yoke can be set to a desired positional relationship.

### Brief Description of Drawings

FIG. 1 is a schematic diagram for describing a steering device of an embodiment.
FIG. 2 is a cross-sectional view of a cross section including a torque sensor in the steering device according to the embodiment.
FIG. 3 is a schematic diagram describing an outline of a magnet, a stator, and a magnetic collection yoke included in the torque sensor.
FIG. 4 is an exploded perspective view of a magnetic collection yoke assembly.
FIG. 5 is a schematic diagram illustrating disposition positions of movement restriction protrusions on a magnetic collection yoke accommodation portion.
FIG. 6 is a detailed view illustrating a state before the magnetic collection yoke assembly is attached to a first housing.
FIG. 7 is a detailed view of a gap between an inner wall of a storage portion and a movement restriction protrusion, and a gap between a flange portion of the stator and the magnetic collection yoke.
FIG. 8 is a schematic diagram illustrating a state in which a magnetic shield cover is disposed on the magnetic collection yoke accommodation portion.
FIG. 9 is a modification of the torque sensor according to the embodiment, and is an explanatory view of movement restriction protrusions extending in a length direction.
FIG. 10 is a modification of the torque sensor according to the embodiment, and is an explanatory view of movement restriction protrusions extending in a width direction.

### Description of Embodiments

Hereinafter, the present disclosure will be described in detail with reference to the drawings. Note that the present disclosure is not limited by a mode for carrying out the invention described below (hereinafter, referred to as an embodiment). In addition, constituent elements in the embodiment described below include those that can be easily assumed by those skilled in the art, those that are substantially the same, and those within a so-called equivalent range. Further, the constituent elements disclosed in the embodiment described below can be appropriately combined.

### [Embodiment]

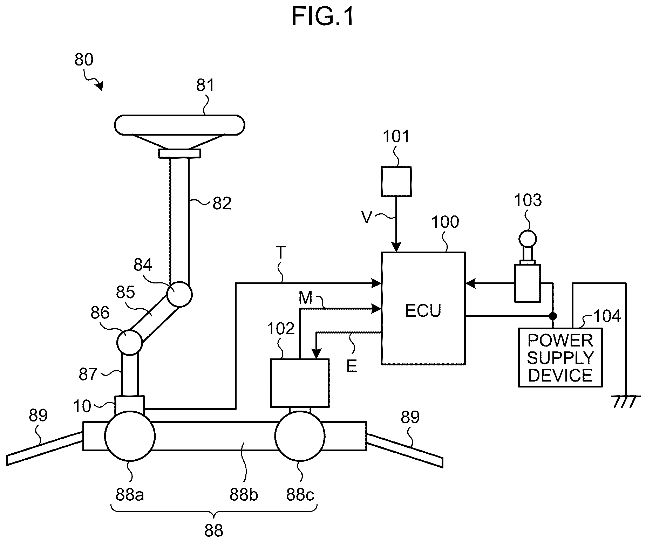

FIG. 1 is a schematic diagram for describing a steering device 80 of the embodiment. As illustrated in FIG. 1, the steering device 80 includes a steering wheel 81, a steering shaft 82, a universal joint 84, an intermediate shaft 85, a universal joint 86, a stub shaft 87, a steering gear 88, and a tie rod 89 in order of transmission of force applied from an operator. In addition, the steering device 80 includes a control device (hereinafter, referred to as an electronic control unit (ECU)) 100, a torque sensor 10, and an electric motor 102. A vehicle speed sensor 101 is provided in a vehicle, and outputs a vehicle speed signal V to the ECU 100 by controller area network (CAN) communication.

The steering shaft 82 is coupled to the steering wheel 81 at one end portion and coupled to the universal joint 84 at the other end portion.

The intermediate shaft 85 is coupled to the universal joint 84 at one end portion and coupled to the universal joint 86 at the other end portion. The stub shaft 87 is coupled to the universal joint 86 at one end portion and coupled to the torque sensor 10 at the other end portion. The torque sensor 10 is coupled to the stub shaft 87 at one end portion and coupled to a first pinion gear 88a included in the steering gear 88 at the other end portion.

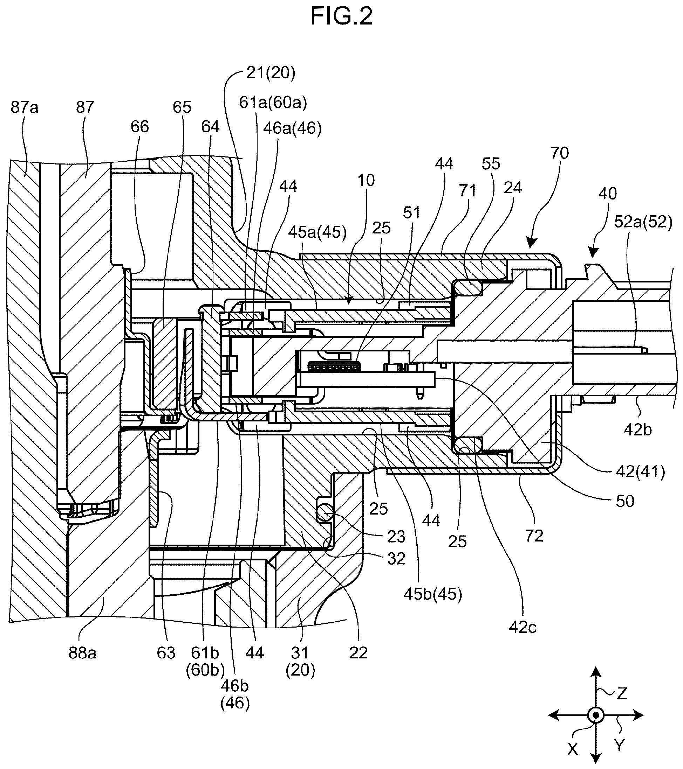

Specifically, the first pinion gear 88a is a member having a shaft shape in which a gear (not illustrated) meshing with a rack bar 88b to be described below is formed at an end portion on a side opposite a side coupled to the stub shaft 87, and the stub shaft 87 and the first pinion gear 88a are coupled via a torsion bar 87a (see FIG. 2). The torsion bar 87a has one end coupled to the stub shaft 87 and the other end coupled to the first pinion gear 88a, and the torsion bar 87a transmits a rotation torque between the stub shaft 87 and the first pinion gear 88a.

The torque sensor 10 is a torque detection device that detects a torque acting on a shaft coupled to the torque sensor 10, and detects a rotation torque transmitted between the stub shaft 87 and the first pinion gear 88a via the torsion bar 87a. That is, the stub shaft 87 and the first pinion gear 88a coupled via the torsion bar 87a are shafts to be detected when a torque is detected by the torque sensor 10.

The steering gear 88 includes the first pinion gear 88a, the rack bar 88b, and a second pinion gear 88c. The first pinion gear 88a is coupled to the stub shaft 87 via the torsion bar 87a. In the rack bar 88b, rack teeth (not illustrated) formed on the rack bar 88b mesh with the gear of the first pinion gear 88a. In addition, the rack bar 88b meshes with the second pinion gear 88c at a position different from the position of the first pinion gear 88a.

The electric motor 102 is coupled to the second pinion gear 88c via a worm speed reduction device, which is not illustrated, and the second pinion gear 88c is rotatable by a driving force transmitted from the electric motor 102. The electric motor 102 rotates the second pinion gear 88c via the worm speed reduction device, which is not illustrated. The electric motor 102 is, for example, a brushless motor, but may be a motor including a brush (slider) and a commutator.

The steering gear 88 converts the rotation movement transmitted to the first pinion gear 88a or the second pinion gear 88c into linear movement with the rack bar 88b disposed inside a rack housing (not illustrated). The steering device 80 according to the present embodiment is of a dual pinion assisted type in which the rack bar 88b performs linear movement on the basis of the rotation movement transmitted from the first pinion gear 88a or the second pinion gear 88c. The tie rod 89 is coupled to the rack bar 88b. That is, the steering device 80 is a rack and pinion type electric power steering device.

The torque sensor 10 detects a steering force of a driver transmitted to the steering shaft 82 via the steering wheel 81 as a steering torque. The vehicle speed sensor 101 detects a traveling speed (vehicle speed) of a vehicle on which the steering device 80 is mounted. The electric motor 102, the torque sensor 10, and the vehicle speed sensor 101 are electrically connected to the ECU 100.

The ECU 100 controls the operation of the electric motor 102. In addition, the ECU 100 acquires a signal from each of the torque sensor 10 and the vehicle speed sensor 101. That is, the ECU 100 acquires a steering torque T from the torque sensor 10 and acquires the vehicle speed signal V of the vehicle from the vehicle speed sensor 101. The ECU 100 is supplied with electric power from a power supply device (for example, an in-vehicle battery) 104 in a state where an ignition switch 103 is turned on. The ECU 100 calculates an auxiliary steering command value of an assist command based on the steering torque T and the vehicle speed signal V. Then, the ECU 100 adjusts an electric power value E to be supplied to the electric motor 102 on the basis of the calculated auxiliary steering command value. The ECU 100 acquires information of an induced voltage from the electric motor 102 or information output from a rotation detection device such as a resolver provided in the electric motor 102 as operation information M.

The steering force of the operator (driver) input to the steering wheel 81 is transmitted to the first pinion gear 88a. The steering force transmitted to the first pinion gear 88a is transmitted to the tie rod 89 via the steering gear 88 to displace the wheel.

In addition, the steering force of the operator input to the steering wheel 81 is transmitted to the torque sensor 10 disposed in a transmission path of the steering force from the steering wheel 81 to the first pinion gear 88a. At this time, the ECU 100 acquires the steering torque T from the torque sensor 10 and acquires the vehicle speed signal V from the vehicle speed sensor 101. Then, the ECU 100 controls the operation of the electric motor 102. An auxiliary steering torque produced by the electric motor 102 is transmitted to the second pinion gear 88c.

The auxiliary steering torque transmitted to the second pinion gear 88c is transmitted to the tie rod 89 via the steering gear 88 to displace the wheel. That is, the steering device 80 displaces the wheel using the auxiliary steering torque of the electric motor 102 transmitted to the rack bar 88b through the second pinion gear 88c in addition to the steering force of the operator transmitted to the rack bar 88b through the first pinion gear 88a.

As illustrated in FIG. 1, the steering device 80 is of a dual pinion type in which an assist force is applied to the second pinion gear 88c, but is not limited thereto. The steering device 80 may be, for example, of a column assist type electric power steering device in which an assist force is applied to the steering shaft 82 or of a single pinion assist type electric power steering device in which an assist force is applied to the first pinion gear 88a. In addition, it may be a ball screw type electric power steering device that applies an assist force to the rack bar 88b using a ball screw, or a rack assist type electric power steering device of a kind that applies an assist force to the rack bar 88b without a pinion.

FIG. 2 is a cross-sectional view of a cross section including the torque sensor 10 in the steering device 80 according to the embodiment. Note that, in the following description, when directions are not specifically described, an axial direction Z of the stub shaft 87 or the first pinion gear 88a on which the torque sensor 10 is disposed is also described as the axial direction Z of the torque sensor 10. Similarly, a circumferential direction centered on the axial center of the stub shaft 87 or the first pinion gear 88a is also described as the circumferential direction of the torque sensor 10, and a radial direction centered on the axial center of the stub shaft 87 or the first pinion gear 88a is also described as the radial direction of the torque sensor 10. In addition, in the radial direction of the torque sensor 10, a direction along the radial direction (the left-right direction on the plane of paper of FIG. 2) at a position where a magnetic collection yoke assembly 40 is disposed in the circumferential direction will be described as a length direction Y of the torque sensor 10 or a length direction Y of the magnetic collection yoke assembly 40. In addition, a direction (a depth direction on the plane of paper in FIG. 2) orthogonal to both the length direction Y and the axial direction Z is described as a width direction X of the torque sensor 10 or the width direction X of the magnetic collection yoke assembly 40. In the present embodiment, the length direction Y is a direction orthogonal to the axial direction Z in a cross section passing through the axial center of the stub shaft 87 or the first pinion gear 88a and the center of the magnetic collection yoke assembly 40 in the width direction X.

A housing 20 is disposed around a portion of the stub shaft 87 and the first pinion gear 88a coupled via the torsion bar 87a. The housing 20 includes a first housing 21 and a second housing 31 coupled to each other. The first housing 21 is disposed at a position closer to the stub shaft 87 in the axial direction Z and mainly covers the stub shaft 87, and the second housing 31 is disposed at a position closer to the first pinion gear 88a in the axial direction Z and mainly covers the first pinion gear 88a. In other words, at least a part of the stub shaft 87 and the first pinion gear 88a is disposed inside the first housing 21 and the second housing 31, at least a part of the stub shaft 87 is disposed inside the first housing 21, and at least a part of the first pinion gear 88a is disposed inside the second housing 31. The first housing 21 is attached to the second housing 31 by an attachment bolt (not illustrated), whereby the first housing 21 is fixed to the second housing 31.

In addition, a bearing (not illustrated) is disposed inside the first housing 21, and the stub shaft 87 is rotatably supported on the first housing 21 via the bearing disposed inside the first housing 21. In addition, a bearing (not illustrated) is disposed inside the second housing 31, and the first pinion gear 88a is rotatably supported by the second housing 31 via the bearing disposed inside the second housing 31.

Since the stub shaft 87 is rotatably supported by the first housing 21 and the first pinion gear 88a is rotatably supported by the second housing 31, the stub shaft 87 and the first pinion gear 88a coupled via the torsion bar 87a are integrally rotatably supported by the first housing 21 and the second housing 31.

The housing 20 is attached to a vehicle body in a non-rotatable state, and the housing 20 rotatably supports the stub shaft 87 and the first pinion gear 88a by the bearing disposed in the first housing 21 and the bearing disposed in the second housing 31.

The torque sensor 10 is disposed in the first housing 21 and is disposed near an end portion of the stub shaft 87 that is a first shaft and the first pinion gear 88a that is a second shaft coupled to the stub shaft 87 via the torsion bar 87a. Each of the stub shaft 87 and the first pinion gear 88a is a shaft having a hollow portion, and an end portion of one shaft enters the inside of the other shaft from an end portion of the other shaft. In the present embodiment, the stub shaft 87 enters the inside of the first pinion gear 88a.

The torsion bar 87a is disposed from the inside of the stub shaft 87 to the inside of the first pinion gear 88a, and has one end coupled to the stub shaft 87 and the other end coupled to the first pinion gear 88a. That is, the stub shaft 87 and the first pinion gear 88a are not directly coupled, but are coupled via the torsion bar 87a that is a member having a shaft shape. Therefore, the stub shaft 87 and the first pinion gear 88a can rotate relative to each other, and when torsion occurs in the torsion bar 87a, the stub shaft 87 and the first pinion gear 88a rotate relative to each other as a result of the torsion of the torsion bar 87a.

The torque sensor 10 is disposed near the end portion of the stub shaft 87 and the first pinion gear 88a coupled via the torsion bar 87a as described above, and can detect the torque acting between the stub shaft 87 and the first pinion gear 88a by detecting the angle of relative rotation between the stub shaft 87 and the first pinion gear 88a.

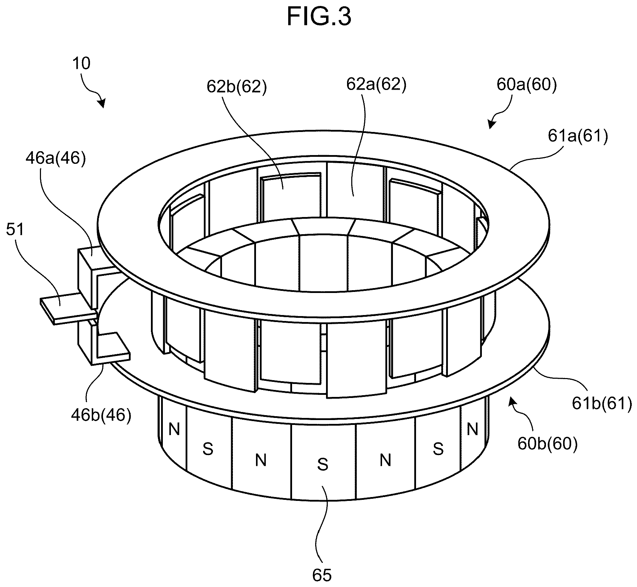

The torque sensor 10 includes a magnet 65, a stator 60 (see FIG. 3), and a magnetic collection yoke 46 (see FIG. 3). The magnet 65 and the stator 60 are separately attached to the stub shaft 87 and the first pinion gear 88a, respectively. The magnetic collection yoke 46 is attached to a sensor housing 41 included in the magnetic collection yoke assembly 40, whereby the magnetic collection yoke 46 is included in the magnetic collection yoke assembly 40. The magnetic collection yoke 46 is fixed to the first housing 21 by attaching the magnetic collection yoke assembly 40 to the first housing 21.

The magnetic collection yoke assembly 40 is detachably attached to the first housing 21. When attached to the first housing 21, the magnetic collection yoke assembly 40 is stored in a storage portion 24 included in the first housing 21. The storage portion 24 is disposed in the vicinity of a portion of the first housing 21 coupled to the second housing 31, and is formed to protrude to a radially outer side from an outer peripheral surface of the first housing 21. In the storage portion 24 included in the first housing 21, a space communicating with the inside of the first housing 21 is formed inside the storage portion 24, and a part of the magnetic collection yoke assembly 40 is stored in the storage portion 24 by being disposed inside the storage portion 24 formed in this manner.

Further, a magnetic shield cover 70 is attached to the storage portion 24 included in the first housing 21. The magnetic shield cover 70 is formed by bending a metal plate member. Both sides of the storage portion 24 in the axial direction Z are covered with the magnetic shield cover 70 attached to the storage portion 24. Specifically, in portions on both sides of the storage portion 24 in the axial direction Z, the magnetic shield cover 70 is formed to extend inward in the radial direction from a position of the storage portion 24 close to a radially outer side. Thus, both sides of the storage portion 24 in the axial direction Z are covered with the magnetic shield cover 70 extending in the length direction Y.

The torque sensor 10 configured as described above can detect the torque on the basis of a change in magnetism when the torsion bar 87a is twisted and the stub shaft 87 and the first pinion gear 88a rotate relative to each other.

FIG. 3 is a schematic diagram describing an outline of the magnet 65, the stator 60, and the magnetic collection yoke 46 included in the torque sensor 10. One of the magnet 65 and the stator 60 included in the torque sensor 10 is attached to the first shaft, and the other is attached to the second shaft. In the present embodiment, the magnet 65 is attached to the stub shaft 87 that is the first shaft, and the stator 60 is attached to the first pinion gear 88a that is the second shaft. Among them, the magnet 65 is formed in a substantially cylindrical shape, and is a multipole magnet in which a plurality of N poles and S poles are alternately disposed in the circumferential direction.

The stator 60 includes flange portions 61 and tooth portions 62. The flange portions 61 are formed in an annular plate-like shape whose thickness direction is the axial direction Z. The tooth portions 62 extend from an inner peripheral part of the annular flange portions 61 in the axial direction Z of the flange portions 61 and are formed in a plate-like shape in which the thickness direction of the plate is an orientation to be the radial direction of the flange portions 61. In addition, in the tooth portions 62, a plurality of tooth portions 62 is disposed side by side in the circumferential direction of the flange portions 61 at intervals.

The stator 60 formed in this manner includes a first stator 60a and a second stator 60b that are a pair of stators 60 formed in the same shape, and each of the first stator 60a and the second stator 60b has the flange portion 61 and the tooth portions 62. That is, the first stator 60a includes a first flange portion 61a having an annular shape and a plurality of first tooth portions 62a, and the second stator 60b includes a second flange portion 61b having an annular shape and a plurality of second tooth portions 62b. The first stator 60a and the second stator 60b are both attached to the same shaft in an orientation in which the flange portions 61 of both are positioned coaxially and the flange portions 61 are positioned in a direction away from the other stator 60. In the present embodiment, the first stator 60a and the second stator 60b are both attached to the first pinion gear 88a.

That is, the first stator 60a is disposed in an orientation in which the first tooth portions 62a extend from the first flange portion 61a to the second stator 60b side, and the second stator 60b is disposed in an orientation in which the second tooth portions 62b extend from the second flange portion 61b to the first stator 60a side. At this time, since the plurality of first tooth portions 62a and the plurality of second tooth portions 62b are both provided on the first flange portion 61a and the second flange portion 61b at intervals, the first stator 60a and the second stator 60b are combined such that the tooth portions 62 of the own stator 60 are positioned in portions where the tooth portions 62 of the other stator 60 are not positioned in the circumferential direction.

The magnet 65 attached to the stub shaft 87 is disposed inside the first stator 60a and the second stator 60b combined in this manner. In addition, the magnet 65 and the stator 60 are disposed in an orientation in which the axial direction Z coincides with the axial direction Z of the stub shaft 87 or the first pinion gear 88a. For these reasons, the magnet 65 and the stator 60 are disposed to be attached to the stub shaft 87 and the first pinion gear 88a in a state of the positional relationship in which the outer peripheral surface of the magnet 65 faces the tooth portions 62 of the stator 60. Since the magnet 65 and the stator 60 are disposed in the above positional relationships, when the torque is transmitted between the stub shaft 87 and the first pinion gear 88a via the torsion bar 87a and the stub shaft 87 and the first pinion gear 88a relatively slightly rotate, the magnetic flux acting on the stator 60 from the magnet 65 changes as a result of a change in relative positional relationship between the magnet 65 and the stator 60.

In addition, the magnetic collection yoke 46 included in the magnetic collection yoke assembly 40 is disposed near the stator 60. The magnetic collection yoke 46 is a member for detecting a change in magnetic flux acting on the stator 60 from the magnet 65, and is disposed in the vicinity of the flange portions 61 included in the stator 60. As the stator 60, a pair of the first stator 60a and the second stator 60b is provided, and therefore as the magnetic collection yoke 46, a pair of a first magnetic collection yoke 46a and a second magnetic collection yoke 46b is provided correspondingly. That is, in the magnetic collection yoke 46, the first magnetic collection yoke 46a is disposed near the first flange portion 61a included in the first stator 60a, and the second magnetic collection yoke 46b is disposed near the second flange portion 61b included in the second stator 60b.

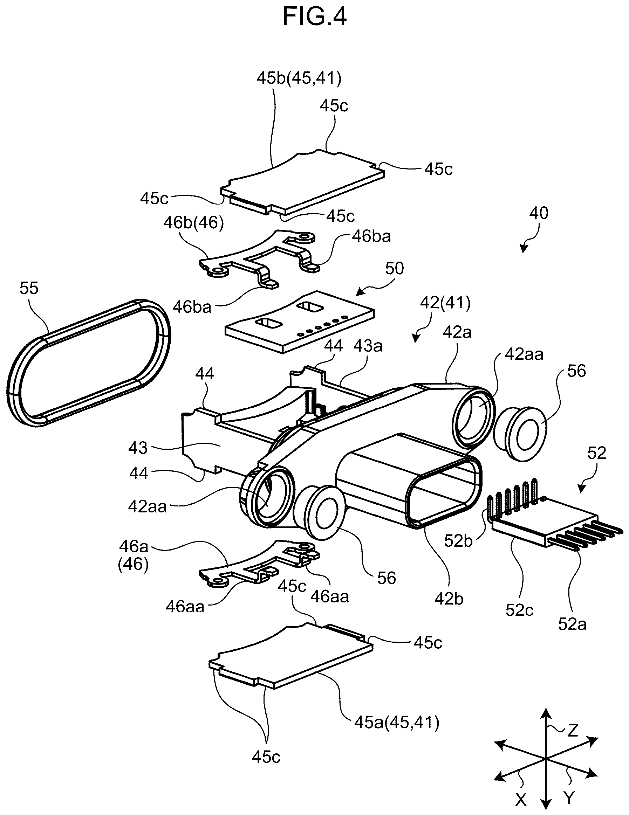

The pair of magnetic collection yokes 46 is located between the two flange portions 61 included in the stator 60 on the radially outer side of the tooth portions 62 of the stator 60, and overlaps the flange portions 61 of the stator 60 with a gap in the axial direction Z. That is, the first magnetic collection yoke 46a is disposed near a surface side of the first flange portion 61a included in the first stator 60a where the second flange portion 61b is located, and the second magnetic collection yoke 46b is disposed near a surface side of the second flange portion 61b included in the second stator 60b where the first flange portion 61a is located. These magnetic collection yokes 46 overlap the flange portions 61 of the stator 60 in a predetermined range in the circumferential direction. That is, portions of the first magnetic collection yoke 46a and the second magnetic collection yoke 46b overlapping the flange portions 61 of the stator 60 are formed in a substantially fan shape (see FIG. 4), whereby the first magnetic collection yoke 46a and the second magnetic collection yoke 46b are disposed to overlap the flange portions 61 of the stator 60 in a partial range in the circumferential direction.

Note that the pair of magnetic collection yokes 46 may be disposed in a positional relationship in which the pair of magnetic collection yokes 46 sandwich the two flange portions 61 included in the pair of stators 60 from both sides in the axial direction Z. That is, the first magnetic collection yoke 46a may be disposed near a surface opposite the side of the first flange portion 61a included in the first stator 60a where the second flange portion 61b is located, and the second magnetic collection yoke 46b may be disposed near a surface opposite the side of the second flange portion 61b included in the second stator 60b where the first flange portion 61a is located. As long as the pair of magnetic collection yokes 46 overlaps the flange portions 61 in the vicinity of the flange portions 61 of the stator 60 in a predetermined range in the circumferential direction, the pair of magnetic collection yokes 46 may be disposed between the first flange portion 61a and the second flange portion 61b, or may be disposed in a positional relationship in which the pair of magnetic collection yokes 46 sandwich the first flange portion 61a and the second flange portion 61b from both sides in the axial direction Z.

As described above, since the magnetic collection yoke 46 is located near the flange portions 61, the pair of magnetic collection yokes 46 can detect a change in magnetic flux according to a relative position change between the pair of stators 60 and the magnet 65. That is, the magnetic collection yoke 46 can detect a change in magnetic flux acting on the stator 60 from the magnet 65 when the stub shaft 87 and the first pinion gear 88a relatively slightly rotate.

Further, a Hall IC 51 (see FIG. 3) is disposed between the two magnetic collection yokes 46. The Hall IC 51 is disposed between the magnetic collection yokes 46 at a position away from a portion of the magnetic collection yoke 46 located near the flange portions 61 of the stator 60. That is, the Hall IC 51 is sandwiched between the first magnetic collection yoke 46a and the second magnetic collection yoke 46b included in the magnetic collection yoke 46. The Hall IC 51 includes a Hall element (not illustrated) that detects a change in magnetic flux detected by the magnetic collection yoke 46, and an output circuit (not illustrated) that converts an output voltage output from the Hall element into a digital electric signal according to the change in magnetic flux. Thus, the Hall IC 51 can detect a change in magnetic flux density acting on the two magnetic collection yokes 46, convert the detected change in magnetic flux density into an electric signal, and output the electric signal. Note that, instead of the Hall IC 51, a magnetic sensor to which a magnetoresistance effect or a tunnel magnetoresistance effect is applied can be used. In short, a change in magnetic flux density generated between the magnetic collection yokes 46 may be output as an electric signal.

As illustrated in FIG. 2, the magnet 65 is attached to the stub shaft 87 by a first sleeve 66. The first sleeve 66 is a cylindrical member, and the stub shaft 87 is press-fitted into the first sleeve 66 to attach the first sleeve 66 to the stub shaft 87. The magnet 65 is fixed to the outer peripheral surface of the first sleeve 66 with, for example, an adhesive, so that the magnet 65 can rotate integrally with the stub shaft 87.

The stator 60 is attached to the first pinion gear 88a by a second sleeve 63 and a carrier 64. The second sleeve 63 is a cylindrical member, and the first pinion gear 88a is press-fitted into the second sleeve 63 to attach the second sleeve 63 to the first pinion gear 88a. The carrier 64 is a cylindrical member, and is formed integrally with the second sleeve 63 by injection molding. Therefore, in the carrier 64, when the second sleeve 63 is attached to the first pinion gear 88a, the carrier 64 is also attached to the first pinion gear 88a together with the second sleeve 63.

The carrier 64 attached to the first pinion gear 88a by the second sleeve 63 is disposed at a position moved to the stub shaft 87 side from the first pinion gear 88a by being supported by the second sleeve 63, and is disposed at a radially outer side position of the stub shaft 87. Further, the carrier 64 is disposed at the same position as the position where the magnet 65 is located in the axial direction Z, and is disposed on a radially outer side of the magnet 65.

The stator 60 is attached to the carrier 64 disposed in this manner. Specifically, the stator 60, each of the first stator 60a and the second stator 60b, is attached to the carrier 64 in a form in which the tooth portions 62 are located on a radially inner side of the carrier 64 and the flange portions 61 protrude from the radially inner side of the carrier 64 to the outer side. Thus, both the first stator 60a and the second stator 60b, which are the pair of stators 60, are disposed at the same position as the position where the magnet 65 is located in the axial direction Z, and are disposed on a radially outer side of the magnet 65.

In addition, since the first stator 60a and the second stator 60b are attached to the carrier 64 formed integrally with the second sleeve 63 attached to the first pinion gear 88a, the first stator 60a and the second stator 60b can rotate integrally with the first pinion gear 88a. In other words, the stator 60 disposed to be integrally rotatable with the first pinion gear 88a includes the flange portions 61 protruding outward in the radial direction of the first pinion gear 88a, and is fixed to the first pinion gear 88a.

As described above, the magnet 65 is fixed to the stub shaft 87, and the stator 60 is fixed to the first pinion gear 88a, so that the magnet 65 and the stator 60 are disposed inside the housing 20 together with the stub shaft 87 and the first pinion gear 88a.

In the second housing 31, an inlay recess 32 is formed on an inner surface side at a position closer to an end portion on a side coupled to the first housing 21 in the axial direction Z. The inlay recess 32 is a recess into which an inlay protrusion 22 of the first housing 21 described below enters.

The inlay recess 32 is formed on an end portion side of the second housing 31 where the first housing 21 is disposed. In the first housing 21 fixed to the second housing 31, the inlay protrusion 22 that enters the inlay recess 32 is formed. The inlay protrusion 22 is formed so as to protrude from the first housing 21 toward a side where the second housing 31 is located in the axial direction Z, and the first housing 21 is positioned in the radial direction with respect to the second housing 31 as the inlay protrusion 22 enters the inlay recess 32.

The inlay protrusion 22 is formed in a cylindrical shape and protrudes from the first housing 21, and has an outer diameter slightly smaller than an inner diameter of the inlay recess 32. A groove portion into which an O-ring 23 as a sealing member is fitted is formed on the outer peripheral surface of the inlay protrusion 22, and the inlay protrusion 22 enters the inlay recess 32 in a state where the O-ring 23 is fitted in the groove portion. Thus, in a state where the inlay protrusion 22 enters the inlay recess 32, the sealability between the first housing 21 and the second housing 31 is secured by the O-ring 23.

Regarding the first housing 21 and the second housing 31, the first housing 21 and the second housing 31 are coupled by attaching the first housing 21 to the second housing 31 with an attachment bolt (not illustrated) in a state where the inlay protrusion 22 of the first housing 21 enters the inlay recess 32 of the second housing 31.

The magnetic collection yoke assembly 40 stored in the storage portion 24 formed in the first housing 21 is attached to the storage portion 24 in an orientation in which the Hall IC 51 is sandwiched from both sides in the axial direction Z by the first magnetic collection yoke 46a and the second magnetic collection yoke 46b in a state of being stored in the storage portion 24. Specifically, the Hall IC 51 is disposed on a circuit board 50 included in the magnetic collection yoke assembly 40, and the circuit board 50 is attached to the sensor housing 41 included in the magnetic collection yoke assembly 40. The sensor housing 41 is a casing of the magnetic collection yoke assembly 40, and includes a housing body 42 and a lid 45 to be described below.

In addition, the magnetic collection yoke 46 is attached to the sensor housing 41 in an orientation in which the Hall IC 51 is sandwiched between the first magnetic collection yoke 46a and the second magnetic collection yoke 46b from both sides in the thickness direction of the circuit board 50. In the present embodiment, the first magnetic collection yoke 46a is located on a side where the stub shaft 87 is located in the axial direction Z, and the second magnetic collection yoke 46b is located on a side where the first pinion gear 88a is located in the axial direction Z. The magnetic collection yoke assembly 40 is accommodated in the storage portion 24 in an orientation in which the thickness direction of the circuit board 50 on which the Hall IC 51 is disposed is the axial direction Z, whereby the first magnetic collection yoke 46a and the second magnetic collection yoke 46b sandwich the Hall IC 51 from both sides in the axial direction Z in a state in which the magnetic collection yoke assembly 40 is accommodated in the storage portion 24.

In addition, the storage portion 24 of the first housing 21 is formed to protrude outward in the radial direction such that the position in the axial direction Z is a position close to the position of the magnet 65 and the stator 60 fixed to the stub shaft 87 and the first pinion gear 88a disposed in the housing 20 in the axial direction Z. Thus, in the storage portion 24, in a state where the magnetic collection yoke assembly 40 is stored in the storage portion 24, the first magnetic collection yoke 46a and the second magnetic collection yoke 46b included in the magnetic collection yoke assembly 40 can be disposed between the first flange portion 61a of the first stator 60a and the second flange portion 61b of the second stator 60b fixed to the first pinion gear 88a.

The sensor housing 41 of the magnetic collection yoke assembly 40 includes the lid 45. The lid 45 is a member that covers the circuit board 50 attached to the sensor housing 41. The sensor housing 41 includes a first lid 45a that is disposed on a side opposite a side where the second housing 31 is located in the axial direction Z with respect to the circuit board 50 and covers the circuit board 50, and a second lid 45b that is disposed on the side where the second housing 31 is located in the axial direction Z with respect to the circuit board 50 and covers the circuit board 50.

The magnetic collection yoke assembly 40 includes a plurality of movement restriction protrusions 44 facing an inner wall 25 of the storage portion 24. The plurality of movement restriction protrusions 44 is disposed on both surfaces of the magnetic collection yoke assembly 40 in the axial direction Z. Two movement restriction protrusions 44 of the plurality of movement restriction protrusions 44 disposed on the magnetic collection yoke assembly 40 are disposed to be separated in at least one direction of the length direction Y and the width direction X on each of both surfaces of the magnetic collection yoke assembly in the axial direction Z. In addition, the two movement restriction protrusions 44 of the plurality of movement restriction protrusions 44 are disposed to be separated in the other direction of the length direction Y and the width direction X, or at least one movement restriction protrusion 44 of the plurality of movement restriction protrusions 44 extends longer in the other direction than in the one direction of the length direction Y and the width direction X. The plurality of movement restriction protrusions 44 is disposed in a range in which the lid 45 of the magnetic collection yoke assembly 40 is disposed or in the vicinity of the range in which the lid 45 is disposed in the length direction Y.

The movement restriction protrusions 44 disposed in this manner are formed to protrude in the axial direction Z from the magnetic collection yoke assembly 40. Therefore, the movement restriction protrusions 44 are closer to the inner wall 25 of the storage portion 24 than a portion other than the movement restriction protrusions 44 of the magnetic collection yoke assembly 40. In addition, the inner wall 25 of the storage portion 24 facing the movement restriction protrusions 44 of the magnetic collection yoke assembly 40 is formed in a flat shape.

In addition, an O-ring 55 that is a sealing member abutting on both the outer peripheral surface of the sensor housing 41 of the magnetic collection yoke assembly 40 stored in the storage portion 24 and the inner wall 25 of the storage portion 24 is disposed therebetween. The O-ring 55 is disposed radially outside the position where the lid 45 is disposed in the length direction Y.

Specifically, in the housing body 42 included in the sensor housing 41, a stepped portion 42c is formed on the outer peripheral surface of a portion on the radially outer side with respect to the position where the lid 45 is disposed. The stepped portion 42c is formed in a notch shape in which the outer peripheral surface of the sensor housing 41 is cut out over the entire circumference. The O-ring 55 abuts on the housing body 42 when an inner peripheral surface is fitted into the stepped portion 42c of the housing body 42, and abuts on both the outer peripheral surface of the housing body 42 and the inner wall 25 of the storage portion 24 when an outer peripheral surface abuts on the inner wall 25 of the storage portion 24.

The magnetic shield cover 70 attached to the storage portion 24 of the first housing 21 includes a first shield portion 71 and a second shield portion 72. The first shield portion 71 is a portion that covers the storage portion 24 from a side opposite the side where the second housing 31 is located in the axial direction Z. The second shield portion 72 is a portion that covers the storage portion 24 from the side where the second housing 31 is located in the axial direction Z. Thus, both sides of the storage portion 24 accommodating the magnetic collection yoke assembly 40 in the axial direction Z are covered with the magnetic shield cover 70 attached to the storage portion 24.

At least one of the first shield portion 71 and the second shield portion 72 included in the magnetic shield cover 70 is disposed to overlap the Hall IC 51 included in the magnetic collection yoke assembly 40 stored in the storage portion 24 in the axial direction Z. In the present embodiment, among the first shield portion 71 and the second shield portion 72, the first shield portion 71 covering the storage portion 24 from the side opposite the side where the second housing 31 is located is disposed to overlap the Hall IC 51 included in the magnetic collection yoke assembly 40 in the axial direction Z.

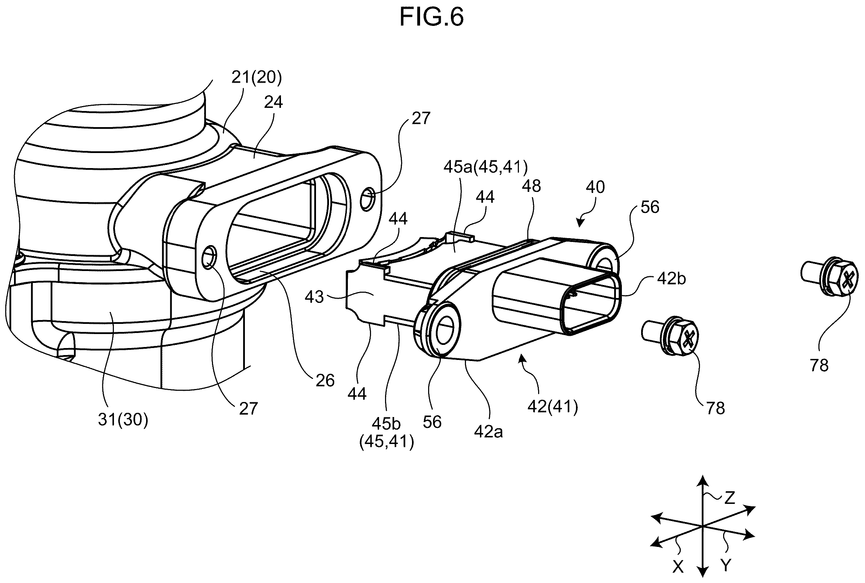

Next, a configuration of the magnetic collection yoke assembly 40 will be described. FIG. 4 is an exploded perspective view of the magnetic collection yoke assembly 40. Note that, in order to illustrate the circuit board 50, FIG. 4 is a perspective view as viewed from the opposite side in the axial direction Z with respect to the magnetic collection yoke assembly 40 illustrated in FIG. 2 or FIG. 6 described below. The magnetic collection yoke assembly 40 includes the sensor housing 41, the lid 45, the magnetic collection yoke 46, the circuit board 50, and a connection terminal 52. The sensor housing 41 is a casing of the magnetic collection yoke assembly 40, and includes the housing body 42 and the lid 45.

The housing body 42 includes a flange portion 42a, a connector portion 42b, and a magnetic collection yoke accommodation portion 43. The flange portion 42a is a portion for attaching the magnetic collection yoke assembly 40 to the storage portion 24 from a radially outer side. The flange portion 42a is a plate-like member formed in an orientation in which the thickness direction is the length direction Y. In the flange portion 42a, bush insertion holes 42aa penetrating in the thickness direction of the flange portion 42a and in which bushes 56 are disposed are formed. The bush insertion hole 42aa is formed at two positions corresponding to two screw holes 27 (see FIG. 6) to be described below formed in the storage portion 24. The bushes 56 disposed in the bush insertion holes 42aa are members made of a metal material and formed in a substantially cylindrical shape, and are inserted into the bush insertion holes 42aa and held in the bush insertion holes 42aa.

The connector portion 42b and the magnetic collection yoke accommodation portion 43 are disposed on opposite sides relative to the plate-like flange portion 42a in the thickness direction of the flange portion 42a. The connector portion 42b is a portion to which an external connector (not illustrated) for outputting an electric signal from the torque sensor 10 to the outside is connected. The connector portion 42b is disposed between the two bush insertion holes 42aa formed in the flange portion 42a, and is formed to protrude radially outward from the flange portion 42a, that is, to the side opposite the side where the magnetic collection yoke accommodation portion 43 is located in the thickness direction of the flange portion 42a.

The magnetic collection yoke accommodation portion 43 is formed in a substantially rectangular frame shape when viewed in the axial direction Z, and accommodates the magnetic collection yoke 46 and the circuit board 50. The magnetic collection yoke 46 and the circuit board 50 are disposed inside the magnetic collection yoke accommodation portion 43 formed in a frame shape. In the magnetic collection yoke 46 accommodated in the magnetic collection yoke accommodation portion 43, the first magnetic collection yoke 46a and the second magnetic collection yoke 46b are disposed on both sides of the circuit board 50 in the axial direction Z. The first magnetic collection yoke 46a and the second magnetic collection yoke 46b are attached to the magnetic collection yoke accommodation portion 43 in a state where the circuit board 50 is sandwiched from both sides.

The O-ring 55 abutting on the magnetic collection yoke assembly 40 and the inner wall 25 of the storage portion 24 is disposed between the magnetic collection yoke accommodation portion 43 and the flange portion 42a in the length direction Y. That is, in the housing body 42 of the magnetic collection yoke assembly 40, the stepped portion 42c into which the O-ring 55 is fitted is formed between the magnetic collection yoke accommodation portion 43 and the flange portion 42a in the length direction Y. Therefore, the O-ring 55 abutting on the magnetic collection yoke assembly 40 and the inner wall 25 of the storage portion 24 is disposed on an outer side of the magnetic collection yoke accommodation portion 43 in the radial direction.

Each magnetic collection yoke 46 includes two magnetic collection portions close to the Hall IC 51 disposed on the circuit board 50 in a state where the magnetic collection yoke 46 is attached to the magnetic collection yoke accommodation portion 43. That is, a magnetic collection portion 46aa close to the Hall IC 51 is formed at two locations in the first magnetic collection yoke 46a, and a magnetic collection portion 46ba close to the Hall IC 51 is formed at two locations in the second magnetic collection yoke 46b.

The lid 45 is a member attached to the housing body 42 so as to cover, from both sides in the axial direction Z, openings 43a of the magnetic collection yoke accommodation portion 43 formed on both sides of the magnetic collection yoke accommodation portion 43 formed in a frame shape in the axial direction Z. The lid 45 includes the first lid 45a and the second lid 45b in accordance with the openings 43a formed on both sides of the magnetic collection yoke accommodation portion 43 in the axial direction Z. The first lid 45a is disposed on the side where the first magnetic collection yoke 46a is disposed with respect to the magnetic collection yoke accommodation portion 43 and attached to the magnetic collection yoke accommodation portion 43, and the second lid 45b is disposed on the side where the second magnetic collection yoke 46b is disposed with respect to the magnetic collection yoke accommodation portion 43 and attached to the magnetic collection yoke accommodation portion 43. Thus, the openings 43a of the magnetic collection yoke accommodation portion 43 formed in a frame shape and in which the magnetic collection yoke 46 and the circuit board 50 are disposed are closed by the first lid 45a and the second lid 45b from both sides in the axial direction Z.

In addition, in the connector portion 42b included in the housing body 42, the connection terminal 52 electrically connected to an external connector is disposed. The connection terminal 52 includes a plurality of terminal pins 52a and a holding member 52c that integrally holds the plurality of terminal pins 52a. The connection terminal 52 is disposed inside the connector portion 42b included in the sensor housing 41, and connection portions 52b located on one end side of the terminal pins 52a are connected to the circuit board 50 accommodated in the magnetic collection yoke accommodation portion 43. The other end side of the terminal pins 52a included in the connection terminal 52 can be electrically connected to an external connector connected to the connector portion 42b.

In the present embodiment, the terminal pins 52a are formed in an L shape, and the connection portions 52b connected to the circuit board 50 are connected to the circuit board 50 in the thickness direction of the circuit board 50. Portions of the terminal pins 52a on a side electrically connected to the external connector are disposed to extend in the length direction Y. Thus, the connection terminal 52 can electrically connect the circuit board 50 and the external connector.

In addition, the movement restriction protrusions 44 included in the magnetic collection yoke assembly 40 and facing the inner wall 25 of the storage portion 24 of the first housing 21 are disposed on the magnetic collection yoke accommodation portion 43. The movement restriction protrusions 44 are formed at edge portions on both sides in the axial direction Z on the magnetic collection yoke accommodation portion 43 formed in a substantially rectangular frame shape when viewed in the axial direction Z, and are formed by protruding from the edge portions in the axial direction Z.

In the present embodiment, the movement restriction protrusions 44 are formed at edge portions of portions extending in the length direction Y at positions on both sides in the width direction X on the magnetic collection yoke accommodation portion 43 having a frame shape. In addition, regarding the movement restriction protrusions 44, at portions extending in the length direction Y on both sides in the width direction X of the magnetic collection yoke accommodation portion 43, the plurality of movement restriction protrusions 44 separated from each other in the length direction Y is disposed near each of both ends in the length direction Y of the magnetic collection yoke accommodation portion 43. For these reasons, regarding the movement restriction protrusions 44, the plurality of movement restriction protrusions 44 separated from each other in the width direction X and the length direction Y is disposed on each of both surfaces of the magnetic collection yoke assembly 40 in the axial direction Z.

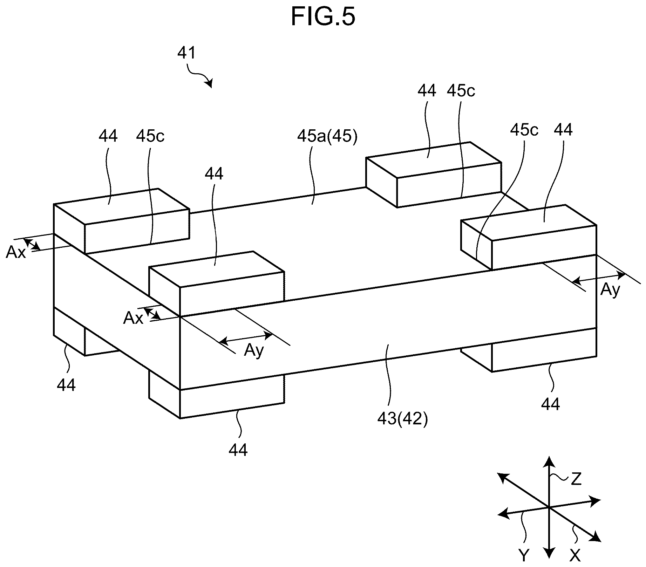

FIG. 5 is a schematic diagram illustrating disposition positions of the movement restriction protrusions 44 on the magnetic collection yoke accommodation portion 43. The movement restriction protrusions 44 disposed on the magnetic collection yoke accommodation portion 43 are disposed to include regions Ay at both ends in the length direction Y and regions Ax at both ends in the width direction X on both surfaces of the magnetic collection yoke accommodation portion 43 in the axial direction Z. That is, the movement restriction protrusions 44 are disposed so as to include four corner regions on both surfaces of the magnetic collection yoke accommodation portion 43 in the axial direction Z. As used herein, the region Ay at both ends of the magnetic collection yoke accommodation portion 43 in the length direction Y means a region of 20% of the length of the magnetic collection yoke accommodation portion 43 in the length direction Y from the end portion of the magnetic collection yoke accommodation portion 43 in the length direction Y. In addition, the region Ax at both ends of the magnetic collection yoke accommodation portion 43 in the width direction X means a region of 30% of the width of the magnetic collection yoke accommodation portion 43 in the width direction X from the end portion of the magnetic collection yoke accommodation portion 43 in the width direction X.

In the present embodiment, regarding the movement restriction protrusions 44, on both surfaces of the magnetic collection yoke accommodation portion 43 in the axial direction Z, the movement restriction protrusion 44 is disposed apart from another movement restriction protrusion 44 in each of the regions Ay at both ends of the movement restriction protrusions 44 in the length direction Y and regions Ax at both ends of the movement restriction protrusions 44 in the width direction X. Therefore, four movement restriction protrusions 44 are disposed on each of both surfaces of the magnetic collection yoke accommodation portion 43 in the axial direction Z, that is, the movement restriction protrusions 44 are disposed at four corners on each of both surfaces of the magnetic collection yoke accommodation portion 43 in the axial direction Z. Each movement restriction protrusion 44 is formed such that the shape of an end portion in the axial direction Z is a flat shape along a plane in which the axial direction Z is a normal direction.

The lid 45 covering the opening 43a of the magnetic collection yoke accommodation portion 43 is disposed between the movement restriction protrusions 44 separated from each other in the length direction Y on both surfaces of the magnetic collection yoke accommodation portion 43 in the axial direction Z. Specifically, the lid 45 is formed to have a shape viewed in the axial direction Z that is close to the shape of the magnetic collection yoke accommodation portion 43, and notches 45c that avoid the movement restriction protrusions 44 are formed at positions corresponding to the positions where the movement restriction protrusions 44 are disposed on the magnetic collection yoke accommodation portion 43.

Therefore, when the lid 45 is disposed on the magnetic collection yoke accommodation portion 43 so as to cover the opening 43a of the magnetic collection yoke accommodation portion 43, the movement restriction protrusions 44 formed on the magnetic collection yoke accommodation portion 43 are located at the portions of the notches 45c formed on the lid 45. Thus, in a state where the lid 45 is disposed on the magnetic collection yoke accommodation portion 43 so as to cover the opening 43a of the magnetic collection yoke accommodation portion 43, a portion of the lid 45 that is positioned between the notches 45c in the length direction Y is disposed between the movement restriction protrusions 44 separated from each other in the length direction Y.

Next, a configuration for attaching the magnetic collection yoke assembly 40 to the first housing 21 will be described. FIG. 6 is a detailed view illustrating a state before the magnetic collection yoke assembly 40 is attached to the first housing 21. The magnetic collection yoke assembly 40 is stored in the storage portion 24 including the first housing 21 and attached to the storage portion 24.

An opening 26 that opens outward in the radial direction is formed in a portion of the storage portion 24 to which the magnetic collection yoke assembly 40 is attached. The opening 26 of the storage portion 24 is an opening part of the inner space of the storage portion 24. In addition, the screw holes 27 into which attachment bolts 78 for attaching the magnetic collection yoke assembly 40 to the storage portion 24 are screwed are formed on sides of the opening 26 on a radially outer surface of the storage portion 24.

The magnetic collection yoke assembly 40 includes the flange portion 42a attached to the storage portion 24 from the radially outer side, the bushes 56 made of a metal member are disposed, and the attachment bolts 78 are screwed into the screw holes 27 of the storage portion 24, and the magnetic collection yoke assembly 40 is attached to the storage portion 24.

When the magnetic collection yoke assembly 40 is attached to the storage portion 24, the magnetic collection yoke accommodation portion 43 is inserted to the inside of the storage portion 24 through the opening 26 of the storage portion 24 in an orientation in which the connector portion 42b of the magnetic collection yoke assembly 40 is positioned on a radially outer side. Thus, the magnetic collection yoke accommodation portion 43 of the magnetic collection yoke assembly 40 in which the magnetic collection yoke 46 and the circuit board 50 are accommodated is stored in the storage portion 24. Further, the attachment bolts 78 are passed through the bush insertion holes 42aa disposed in the flange portion 42a of the magnetic collection yoke assembly 40, and the attachment bolts 78 are screwed into the screw holes 27 of the storage portion 24. Thus, the magnetic collection yoke assembly 40 is fixed to the first housing 21 by being attached to the storage portion 24 of the first housing 21.

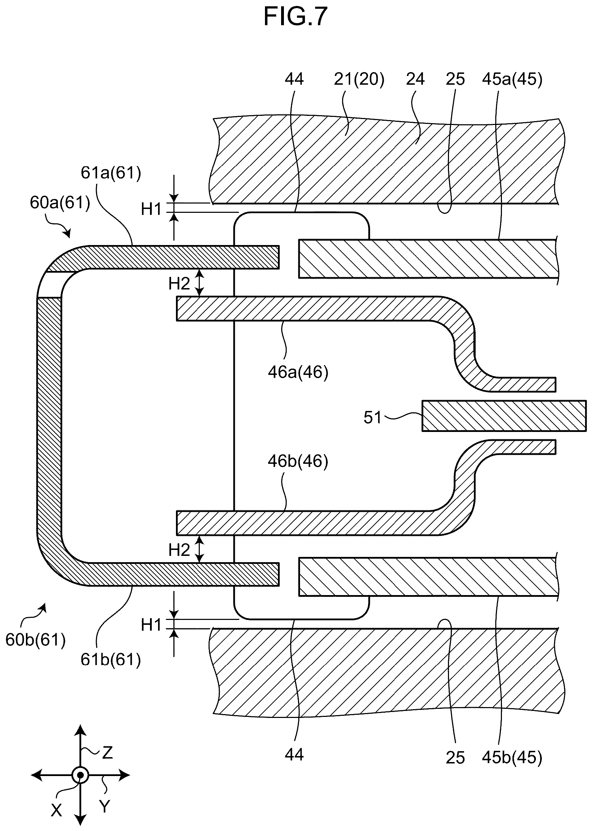

FIG. 7 is a detailed view of a gap between the inner wall 25 of the storage portion 24 and the movement restriction protrusion 44, and a gap between the flange portion 61 of the stator 60 and the magnetic collection yoke 46. In a state where the magnetic collection yoke accommodation portion 43 is stored in the storage portion 24 and the magnetic collection yoke assembly 40 is fixed to the first housing 21, at least some movement restriction protrusions 44 of the plurality of movement restriction protrusions 44 formed on the magnetic collection yoke accommodation portion 43 face the inner wall 25 while being separated from the inner wall 25 of the storage portion 24. That is, in the state in which the magnetic collection yoke assembly 40 is fixed to the first housing 21, among the plurality of movement restriction protrusions 44, all the movement restriction protrusions 44 are separated from the inner wall 25 of the storage portion 24, or some of the movement restriction protrusions 44 abut on the inner wall 25 of the storage portion 24 and the other movement restriction protrusions 44 are separated from the inner wall 25 of the storage portion 24.

In the movement restriction protrusions 44 having such a relationship with respect to the inner wall 25 of the storage portion 24 in a state where the magnetic collection yoke assembly 40 is fixed to the first housing 21, a maximum value of a distance H1 between the movement restriction protrusion 44 and the inner wall 25 is narrower than a distance H2 between the flange portion 61 of the stator 60 and the magnetic collection yoke 46. In this case, the distance H2 between the flange portion 61 of the stator 60 and the magnetic collection yoke 46 is a distance between the flange portion 61 of the corresponding stator 60 and the magnetic collection yoke 46, and is a distance between the first flange portion 61a of the first stator 60a and the first magnetic collection yoke 46a, or a distance between the second flange portion 61b of the second stator 60b and the second magnetic collection yoke 46b. In other words, in the gap between the inner wall 25 of the storage portion 24 and the movement restriction protrusion 44, the distance H1 in the axial direction Z of the gap between the movement restriction protrusion 44 of all the movement restriction protrusions 44 and the inner wall 25 of the storage portion 24 is smaller than the distance H2 in the axial direction Z of the gap between the flange portion 61 of the stator 60 and the magnetic collection yoke 46.

Next, the operation of the steering device 80 will be described. When the steering wheel 81 is operated during driving of the vehicle on which the steering device 80 is mounted, the steering force applied to the steering wheel 81 is transmitted from the steering wheel 81 to the steering shaft 82. The steering force transmitted to the steering shaft 82 is transmitted as a steering torque from the steering shaft 82 to the intermediate shaft 85, and is transmitted from the intermediate shaft 85 to the first pinion gear 88a via the stub shaft 87. Thus, the steering gear 88 including the first pinion gear 88a converts the rotation movement transmitted from the first pinion gear 88a into linear movement of the rack bar 88b to operate the tie rod 89.

In addition, the steering device 80 according to the present embodiment includes the electric motor 102 that generates an auxiliary steering torque that assists the steering of the driver. The electric motor 102 generates an auxiliary steering torque on the basis of the steering torque detected by the torque sensor 10 disposed between the stub shaft 87 and the first pinion gear 88a.

The torque sensor 10 detects the steering torque applied to the stub shaft 87 on the basis of an angle of relative rotation when the stub shaft 87 and the first pinion gear 88a relatively rotate. That is, since the stub shaft 87 and the first pinion gear 88a are coupled via the torsion bar 87a, when a steering torque is applied to the stub shaft 87, the steering torque is transmitted between the stub shaft 87 and the first pinion gear 88a via the torsion bar 87a. At this time, the stub shaft 87 and the first pinion gear 88a rotate relative to each other by slightly twisting the torsion bar 87a.

In the torque sensor 10, since the magnet 65 is attached to the stub shaft 87 and the stator 60 is attached to the first pinion gear 88a, when the stub shaft 87 and the first pinion gear 88a rotate relative to each other, the magnet 65 and the stator 60 included in the torque sensor 10 also rotate relative to each other. Regarding the angle of relative rotation between the magnet 65 and the stator 60, the angle of relative rotation increases as the steering torque acting between the stub shaft 87 and the first pinion gear 88a increases.

When the magnet 65 and the stator 60 rotate relative to each other, the magnetic flux acting on the stator 60 from the magnet 65 changes. The magnetic collection yoke 46 disposed near the stator 60 can detect a change in magnetic flux acting on the stator 60 from the magnet 65. Therefore, when the magnet 65 and the stator 60 relatively rotate as a result of the relative rotation of the stub shaft 87 and the first pinion gear 88a, the magnetic collection yoke 46 disposed in the vicinity of the stator 60 can detect a change in magnetic flux acting on the stator 60 from the magnet 65.

As described above, the magnetic flux that acts on the stator 60 from the magnet 65 and is detected by the pair of magnetic collection yokes 46 changes according to the angle of relative rotation between the magnet 65 and the stator 60. The Hall IC 51 detects a magnetic flux that changes according to the angle of the relative rotation between the magnet 65 and the stator 60 detected by the magnetic collection yoke 46 with a Hall element and converts the magnetic flux into an electric signal with the output circuit, and transmits the electric signal from the connection terminal 52 to the outside of the first housing 21 to transmit the electric signal to the ECU 100. That is, the torque sensor 10 detects the steering torque applied to the stub shaft 87 by detecting a change in magnetic flux acting on the stator 60 from the magnet 65 using the magnetic collection yoke 46 and the Hall IC 51, and transmits the detected steering torque to the ECU 100 as an electric signal.

The ECU 100 operates the electric motor 102 on the basis of the electric signal transmitted from the torque sensor 10, and causes the electric motor 102 to generate an auxiliary steering torque. That is, the electric signal transmitted from the Hall IC 51 of the torque sensor 10 to the ECU 100 changes according to the angle of relative rotation between the magnet 65 and the stator 60, and changes on the basis of the steering torque T acting between the stub shaft 87 and the first pinion gear 88a. Therefore, the ECU 100 uses the electric signal transmitted from the Hall IC 51 of the torque sensor 10 as information that changes according to the steering torque T acting on the stub shaft 87 and the first pinion gear 88a, adjusts the electric power value E supplied to the electric motor 102 on the basis of the electric signal transmitted from the Hall IC 51, and causes the electric motor 102 to generate the auxiliary steering torque.

That is, the ECU 100 acquires a signal of the steering torque T from the torque sensor 10, acquires the vehicle speed signal V of the vehicle from the vehicle speed sensor 101, further acquires the operation information M of the electric motor 102 from the rotation detection device provided in the electric motor 102, and causes the electric motor 102 to generate the auxiliary steering torque on the basis of the operation information M, the steering torque T, and the vehicle speed signal V. The auxiliary steering torque generated by the electric motor 102 is transmitted to the second pinion gear 88c. The steering gear 88 including the second pinion gear 88c converts the rotation movement transmitted from the second pinion gear 88c into linear movement of the rack bar 88b. Thus, the steering force applied to the steering wheel 81 by the driver is assisted by the auxiliary steering torque generated by the electric motor 102.

Here, regarding the output characteristic when the steering torque is detected by the torque sensor 10, the steering torque can be detected with a desired output characteristic at the time of designing the torque sensor 10 by equalizing the distance in the axial direction Z between the pair of magnetic collection yokes 46 and the flange portions 61 of the pair of stators 60. That is, in the torque sensor 10, the distance between the first flange portion 61a of the first stator 60a and the first magnetic collection yoke 46a in the axial direction Z and the distance between the second flange portion 61b of the second stator 60b and the second magnetic collection yoke 46b in the axial direction Z are set to an equal interval, so that it is possible to suppress the occurrence of individual differences in the output characteristic of the torque sensor 10.

As described above, in the torque sensor 10, it is important to set the distance between the flange portions 61 of the pair of stators 60 and the pair of magnetic collection yokes 46 in the axial direction Z to an equal interval, and among them, the stator 60 is fixed to the first pinion gear 88a that is rotatably supported with respect to the housing 20. In addition, regarding the magnetic collection yoke 46, the magnetic collection yoke assembly 40 including the magnetic collection yoke 46 is stored in the storage portion 24 of the first housing 21 and attached to the housing 20.

On the other hand, the magnetic collection yoke assembly 40 may be fixed to the housing 20 by including a sealing member having elasticity with respect to the housing 20 in consideration of watertightness and the like, and also in the present embodiment, the O-ring 55 is disposed between the magnetic collection yoke assembly 40 and the storage portion 24. When the magnetic collection yoke assembly 40 is stored in the storage portion 24 of the first housing 21 and attached to the housing 20, the O-ring 55 is in a compressed state of being in contact with both the magnetic collection yoke assembly 40 and the first housing 21. Therefore, when the magnetic collection yoke assembly 40 is attached to the housing 20, the attachment position with respect to the housing 20 may slightly change according to the degree of compression of the O-ring 55.

When the attachment position of the magnetic collection yoke assembly 40 to the housing 20 changes according to the degree of compression of the O-ring 55, the distance in the axial direction Z between the magnetic collection yoke 46 included in the magnetic collection yoke assembly 40 and the flange portions 61 of the stator 60 also changes according to the degree of compression of the O-ring 55. In this case, since the distance between the flange portions 61 of the pair of stators 60 and the pair of magnetic collection yokes 46 in the axial direction Z may not be an equal interval, individual differences are likely to occur in the output characteristics of the torque sensor 10.

On the other hand, in the torque sensor 10 according to the present embodiment, when the magnetic collection yoke assembly 40 is stored in the storage portion 24 included in the first housing 21, the attachment position of the magnetic collection yoke assembly 40 in the axial direction Z is restricted by the movement restriction protrusions 44 disposed on both surfaces of the magnetic collection yoke assembly 40 in the axial direction Z. That is, when the magnetic collection yoke assembly 40 is stored in the storage portion 24, the movement restriction protrusions 44 disposed on the magnetic collection yoke assembly 40 abut on the inner wall 25 of the storage portion 24, whereby the magnetic collection yoke assembly 40 is positioned in axial direction Z and fixed to the first housing 21. Therefore, the magnetic collection yoke assembly 40 is fixed to the first housing 21 in a positional relationship as close as possible to the positional relationship at the time of designing the torque sensor 10.

In addition, since the plurality of movement restriction protrusions 44 is disposed apart from each other in the length direction Y and the width direction X, the plurality of movement restriction protrusions 44 abuts on the inner wall 25 of the storage portion 24, whereby the magnetic collection yoke 46 is positioned in an orientation parallel to the flange portions 61 of the stator 60 and the magnetic collection yoke assembly 40 is fixed to the first housing 21.

Thus, the magnetic collection yoke assembly 40 is fixed to the first housing 21 such that the distance between the first flange portion 61a of the first stator 60a and the first magnetic collection yoke 46a in the axial direction Z and the distance between the second flange portion 61b of the second stator 60b and the second magnetic collection yoke 46b in the axial direction Z are an equal interval. Accordingly, in the torque sensor 10, the magnetic collection yoke assembly 40 is prevented from being fixed to the housing 20 with the distance between the pair of magnetic collection yokes 46 and the pair of stators 60 in the axial direction Z being not an equal interval, so that it is possible to prevent the occurrence of individual differences in the output characteristics of the torque sensor 10.

As described above, in the torque sensor 10 according to the present embodiment, the magnetic collection yoke assembly 40 including the pair of magnetic collection yokes 46 includes the movement restriction protrusions 44 facing the inner wall 25 of the storage portion 24 included in the housing 20, and the movement restriction protrusions 44 are disposed on both surfaces of the magnetic collection yoke assembly 40 in the axial direction Z. Thus, when the magnetic collection yoke assembly 40 is stored in the storage portion 24, the movement restriction protrusions 44 abut on the inner wall 25 of the storage portion 24, whereby the position in the axial direction Z with respect to the housing 20 is restricted, and the magnetic collection yoke assembly 40 is fixed in a desired positional relationship with respect to the housing 20. In addition, the plurality of movement restriction protrusions 44 is disposed on both surfaces of the magnetic collection yoke assembly 40 in the axial direction Z, and two movement restriction protrusions 44 of the plurality of movement restriction protrusions 44 are disposed to be separated from each other in at least one direction of the length direction Y and the width direction X. In addition, the two movement restriction protrusions 44 of the plurality of movement restriction protrusions 44 are disposed to be separated in the other direction of the length direction Y and the width direction X, or at least one movement restriction protrusion 44 of the plurality of movement restriction protrusions 44 extends longer in the other direction than in the one direction of the length direction Y and the width direction X. Therefore, when the magnetic collection yoke assembly 40 is stored in the storage portion 24, the movement restriction protrusions 44 abut on the inner wall 25 of the storage portion 24, so that portions of the storage portion 24 and the magnetic collection yoke assembly 40 that are separated from each other in each of the length direction Y and the width direction X abut on each other, and therefore, the magnetic collection yoke assembly 40 is fixed to the housing 20 with an attachment angle of the magnetic collection yoke assembly 40 with respect to the housing 20 being also at a desired attachment angle.

Thus, the magnetic collection yoke 46 included in the magnetic collection yoke assembly 40 can be fixed to the housing 20 in a desired positional relationship, and the magnetic collection yoke assembly 40 can be disposed in a desired positional relationship with respect to the stator 60 fixed to the first pinion gear 88a. As a result, the positional relationship between the stator 60 and the magnetic collection yoke 46 can be set to a desired positional relationship.

In addition, the movement restriction protrusions 44 protruding in the axial direction Z are formed on the magnetic collection yoke assembly 40, and the movement restriction protrusions 44 are caused to abut on the inner wall 25 of the storage portion 24 included in the housing 20, so that it is possible to reduce the manufacturing cost for abutment on the inner wall 25 of the storage portion 24 with high dimensional accuracy. That is, when the magnetic collection yoke assembly 40 is caused to abut on the inner wall 25 of the storage portion 24 with high dimensional accuracy, it is necessary to perform processing of the abutment portions by increasing the processing accuracy, but in the present embodiment, the movement restriction protrusions 44 are formed on the magnetic collection yoke assembly 40, and the movement restriction protrusions 44 are caused to abut on the inner wall 25 of the storage portion 24. Therefore, in the magnetic collection yoke assembly 40, only the movement restriction protrusions 44 are abutment portions with respect to the inner wall 25 of the storage portion 24 in the axial direction Z with high dimensional accuracy, so that it is not necessary to process the entire both surfaces of the magnetic collection yoke assembly 40 in the axial direction Z with high dimensional accuracy. Accordingly, a range in which processing is performed with high dimensional accuracy can be reduced, so that the manufacturing cost can be reduced, and the positional relationship between the stator 60 and the magnetic collection yoke 46 can be set to a desired positional relationship while suppressing the manufacturing cost.

In addition, the magnetic collection yoke assembly 40 includes the magnetic collection yoke accommodation portion 43 that accommodates the magnetic collection yoke 46, and the movement restriction protrusions 44 are disposed on the magnetic collection yoke accommodation portion 43. Therefore, when the magnetic collection yoke assembly 40 is stored in the storage portion 24 included in the housing 20, the magnetic collection yoke accommodation portion 43 that accommodates the magnetic collection yoke 46 can be positioned with respect to the housing 20. Thus, the magnetic collection yoke assembly 40 fixed to the housing 20 can dispose the magnetic collection yoke 46 accommodated in the magnetic collection yoke accommodation portion 43 in an appropriate positional relationship with respect to the stator 60. As a result, the positional relationship between the stator 60 and the magnetic collection yoke 46 can be set to a desired positional relationship.

In addition, the movement restriction protrusions 44 are disposed to include the regions Ay at both ends in the length direction Y and the regions Ax at both ends in the width direction X on both surfaces of the magnetic collection yoke accommodation portion 43 in the axial direction Z. That is, the movement restriction protrusions 44 are disposed so as to include four corner regions on each of both surfaces of the magnetic collection yoke accommodation portion 43 in the axial direction Z. Therefore, when the magnetic collection yoke assembly 40 is stored in the storage portion 24 included in the housing 20, the movement restriction protrusions 44 at the four corners of the magnetic collection yoke accommodation portion 43 abut on the inner wall 25 of the storage portion 24, whereby the magnetic collection yoke assembly 40 can position the magnetic collection yoke accommodation portion 43 at an appropriate position. Thus, the magnetic collection yoke assembly 40 stored in the storage portion 24 can dispose the magnetic collection yoke 46 accommodated in the magnetic collection yoke accommodation portion 43 in an appropriate positional relationship with respect to the stator 60. As a result, the positional relationship between the stator 60 and the magnetic collection yoke 46 can be set to a desired positional relationship.

In addition, in the magnetic collection yoke assembly 40, the O-ring 55 abutting on the inner wall 25 of the storage portion 24 is disposed on the radially outer side of the magnetic collection yoke accommodation portion 43 in the length direction Y, and therefore it is possible to suppress the entry of water or the like into the storage portion 24 from the outside of the housing 20. In addition, since the magnetic collection yoke assembly 40 includes the plurality of movement restriction protrusions 44, even when the O-ring 55 abutting on the inner wall 25 of the storage portion 24 is disposed on the magnetic collection yoke assembly 40, the magnetic collection yoke assembly 40 can be positioned at an appropriate position by the movement restriction protrusions 44 regardless of the degree of compression of the O-ring 55 when the magnetic collection yoke assembly 40 is stored in the storage portion 24. Thus, the magnetic collection yoke assembly 40 stored in the storage portion 24 can dispose the magnetic collection yoke 46 accommodated in the magnetic collection yoke accommodation portion 43 in an appropriate positional relationship with respect to the stator 60 while suppressing entry of water or the like into the storage portion 24 from the outside of the housing 20 with the O-ring 55. As a result, the positional relationship between the stator 60 and the magnetic collection yoke 46 can be set to a desired positional relationship.

In addition, the plurality of movement restriction protrusions 44 disposed on both surfaces of the magnetic collection yoke assembly 40 is disposed to be separated from each other at least in the length direction Y on each surface, and the lid 45 covering the opening 43a of the magnetic collection yoke accommodation portion 43 is disposed between the movement restriction protrusions 44 separated from each other in the length direction Y. Therefore, in the magnetic collection yoke assembly 40, the movement restriction protrusions 44 facing the inner wall 25 of the storage portion 24 can be disposed on both surfaces of the magnetic collection yoke assembly 40 in the axial direction Z while dust-proofness with respect to the magnetic collection yoke 46 and the circuit board 50 is secured by the lid 45. Thus, the magnetic collection yoke assembly 40 stored in the storage portion 24 can dispose the magnetic collection yoke 46 accommodated in the magnetic collection yoke accommodation portion 43 in an appropriate positional relationship with respect to the stator 60 while ensuring dust-proofness of the magnetic collection yoke accommodation portion 43. As a result, the positional relationship between the stator 60 and the magnetic collection yoke 46 can be set to a desired positional relationship.

In addition, regarding the plurality of movement restriction protrusions 44 disposed on the magnetic collection yoke assembly 40, the maximum value of the distance H1 between the movement restriction protrusion 44 and the inner wall 25 is narrower than the distance H2 between the flange portion 61 of the stator 60 and the magnetic collection yoke 46. Therefore, when the magnetic collection yoke assembly 40 is stored in the storage portion 24 of the housing 20, even when the movement restriction protrusions 44 abut on the inner wall 25 of the storage portion 24, the magnetic collection yoke assembly 40 can secure the distance between the flange portions 61 of the stator 60 and the magnetic collection yoke 46 in the axial direction Z. Thus, in the magnetic collection yoke assembly 40 stored in the storage portion 24, the position of the magnetic collection yoke 46 in the axial direction Z with respect to the housing 20 can be located at an appropriate position, and the magnetic collection yoke 46 can be disposed in an appropriate positional relationship with respect to the stator 60. As a result, the positional relationship between the stator 60 and the magnetic collection yoke 46 can be set to a desired positional relationship.

### [Modification]

Note that, in the above-described embodiment, among the plurality of movement restriction protrusions 44 included in the magnetic collection yoke assembly 40, at least some movement restriction protrusions 44 are separated from the inner wall 25 of the storage portion 24, but among the plurality of movement restriction protrusions 44 included in the magnetic collection yoke assembly 40, all the movement restriction protrusions 44 may abut on the inner wall 25 of the storage portion 24. That is, when the magnetic collection yoke assembly 40 is stored in the storage portion 24 included in the first housing 21, all the movement restriction protrusions 44 of the magnetic collection yoke assembly 40 may abut on the inner wall 25 of the storage portion 24, and the magnetic collection yoke assembly 40 may be stored in a state of being press-fitted into the storage portion 24. The magnetic collection yoke assembly 40 can be disposed with positional accuracy in the axial direction Z with respect to the housing 20 being high accuracy by being press-fitted into the storage portion 24, and the magnetic collection yoke 46 can be disposed with an appropriate positional relationship with respect to the stator 60. As a result, the positional relationship between the stator 60 and the magnetic collection yoke 46 can be set to a desired positional relationship.

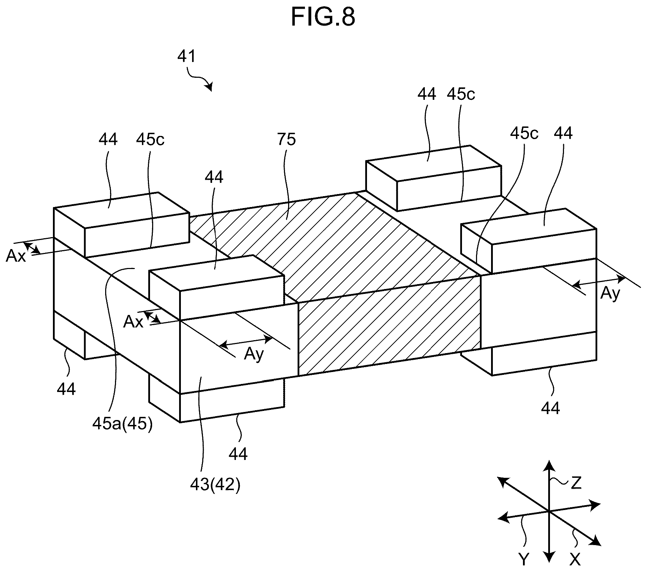

In addition, the movement restriction protrusions 44 disposed on both surfaces of the magnetic collection yoke accommodation portion 43 in the axial direction Z are preferably disposed at the four corners: both ends in the width direction X and both ends in the length direction Y of the magnetic collection yoke accommodation portion 43. FIG. 8 is a schematic diagram illustrating a state in which a magnetic shield cover 75 is disposed on the magnetic collection yoke accommodation portion 43. The movement restriction protrusions 44 are disposed at the four corners on both surfaces of the magnetic collection yoke accommodation portion 43 in the axial direction Z, so that the magnetic shield cover 75 can be disposed between the movement restriction protrusions 44 separated from each other in the length direction Y with respect to the magnetic collection yoke accommodation portion 43 as illustrated in FIG. 8. Thus, the magnetic shield cover 75 that shields an external magnetic field from an external magnetic body when a change in magnetic flux acting on the stator 60 from the magnet 65 is detected by the magnetic collection yoke 46 or the Hall IC 51 can be easily disposed with respect to the magnetic collection yoke accommodation portion 43. As a result, the effect of the external magnetic field in detecting the steering torque can be easily suppressed by the magnetic shield cover 75, and the steering torque can be appropriately detected.

In addition, the movement restriction protrusions 44 are disposed on the four portions at the four corners on both surfaces of the magnetic collection yoke accommodation portion 43 in the axial direction Z, so that rattling of the magnetic collection yoke assembly 40 stored in the storage portion 24 can be prevented. That is, by disposing the movement restriction protrusions 44 on the four portions at the four corners on both surfaces of magnetic collection yoke accommodation portion 43, bidirectional rotation between the rotation about the axial center extending in the length direction Y and the rotation about the axial center extending in the width direction X of the magnetic collection yoke assembly 40 stored in the storage portion 24 can be suppressed by the movement restriction protrusions 44 abutting on the inner wall 25 of the storage portion 24. Thus, the rotation of the magnetic collection yoke assembly 40 stored in the storage portion 24 with respect to the storage portion 24 can be suppressed by the movement restriction protrusions 44, and rattling of the magnetic collection yoke assembly 40 can be prevented.

In addition, the change in angle of the magnetic collection yoke assembly 40 with respect to the storage portion 24 when the movement restriction protrusions 44 abut on or separate from the inner wall 25 of the storage portion 24 decreases as the interval between the movement restriction protrusions 44 disposed on the same surface of the magnetic collection yoke accommodation portion 43 increases. Therefore, by disposing the movement restriction protrusions 44 at the four corners on both surfaces of the magnetic collection yoke accommodation portion 43 in the axial direction Z, the interval between the movement restriction protrusions 44 disposed on the same surface of the magnetic collection yoke accommodation portion 43 in the axial direction Z can be increased as much as possible, and the change in angle of the magnetic collection yoke accommodation portion 43 stored in the storage portion 24 can be suppressed as much as possible. Thus, rattling of the magnetic collection yoke assembly 40 stored in the storage portion 24 can be prevented. As a result, the relative positional relationship between the magnetic collection yoke 46 included in the magnetic collection yoke assembly 40 and the flange portions 61 of the stator 60 can be prevented from changing due to the rattling of the magnetic collection yoke assembly 40, and the steering torque can be appropriately detected.

In addition, in the above-described embodiment, regarding the movement restriction protrusions 44 included in the magnetic collection yoke assembly 40, the four movement restriction protrusions 44 separated from each other in the length direction Y and the width direction X are disposed at the four corners of the magnetic collection yoke accommodation portion 43 on both surfaces of the magnetic collection yoke accommodation portion 43 in the axial direction Z, but the movement restriction protrusions 44 may not be separated from each other in both the length direction Y and the width direction X.

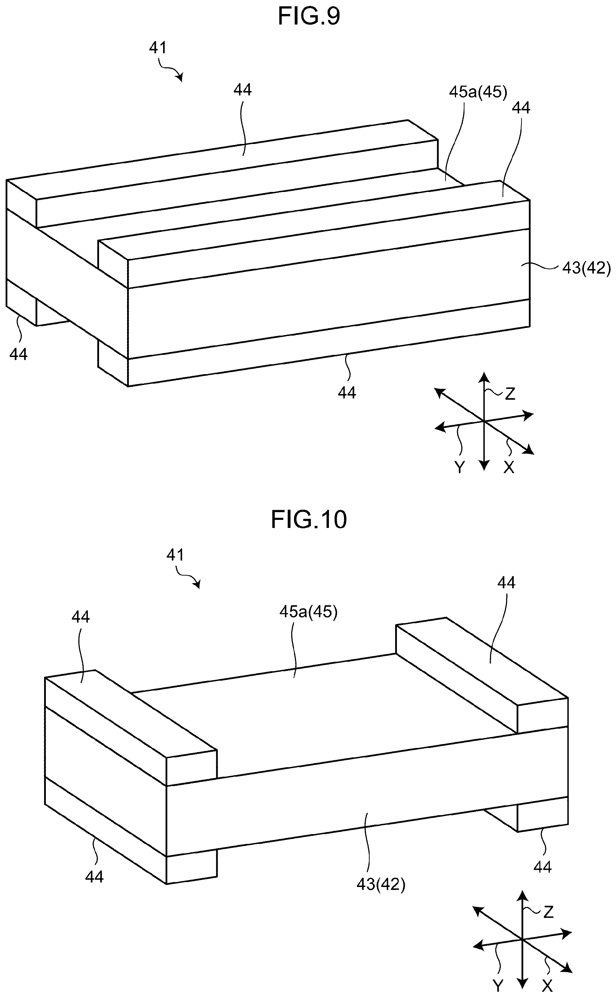

FIG. 9 is a modification of the torque sensor 10 according to the embodiment, and is an explanatory view of movement restriction protrusions 44 extending in the length direction Y. FIG. 10 is a modification of the torque sensor 10 according to the embodiment, and is an explanatory view of movement restriction protrusions 44 extending in the width direction X. For example, as illustrated in FIG. 9, the movement restriction protrusions 44 may be disposed such that two movement restriction protrusions 44 are disposed on each of both surfaces of the magnetic collection yoke accommodation portion 43 in the axial direction Z so as to be separated from each other in the width direction X and extend in the length direction Y. Alternatively, as illustrated in FIG. 10, two movement restriction protrusions 44 may be disposed on each of both surfaces of the magnetic collection yoke accommodation portion 43 in the axial direction Z so as to be separated from each other in the length direction Y and extend in the width direction X. As long as the movement restriction protrusions 44 are disposed so as to include regions Ay (see FIG. 5) at both ends in the length direction Y and regions Ax (see FIG. 5) at both ends in the width direction X on both surfaces of the magnetic collection yoke accommodation portion 43 in the axial direction Z, the movement restriction protrusions 44 may be separated from each other or may extend between the regions Ay and Ax.

Although the preferred embodiments of the present disclosure have been described above, the present disclosure is not limited to those described in the above embodiments. The configurations described as the embodiment and the modifications may be appropriately combined.

### Reference Signs List

- 10: TORQUE SENSOR

- 20: HOUSING
- 21: FIRST HOUSING
- 24: STORAGE PORTION
- 25: INNER WALL
- 26: OPENING
- 31: SECOND HOUSING
- 40: MAGNETIC COLLECTION YOKE ASSEMBLY
- 41: SENSOR HOUSING
- 42: HOUSING BODY
- 43: MAGNETIC COLLECTION YOKE ACCOMMODATION PORTION
- 43a: OPENING
- 44: MOVEMENT RESTRICTION PROTRUSION
- 45: LID
- 46: MAGNETIC COLLECTION YOKE
- 50: CIRCUIT BOARD
- 51: HALL IC
- 52: CONNECTION TERMINAL
- 55: O-RING
- 60: STATOR
- 61: FLANGE PORTION
- 62: TOOTH PORTION
- 64: CARRIER
- 65: MAGNET
- 80: STEERING DEVICE
- 81: STEERING WHEEL
- 82: STEERING SHAFT
- 84, 86: UNIVERSAL JOINT
- 85: INTERMEDIATE SHAFT
- 87: STUB SHAFT
- 87a: TORSION BAR
- 88: STEERING GEAR
- 88a: FIRST PINION GEAR
- 88b: RACK BAR
- 88c: SECOND PINION GEAR
- 89: TIE ROD
- 100: ECU
- 101: VEHICLE SPEED SENSOR
- 102: ELECTRIC MOTOR
- 103: IGNITION SWITCH
- 104: POWER SUPPLY DEVICE

## Claims

1. A torque sensor comprising:
a housing;
a shaft that is disposed inside the housing;
a pair of stators that includes a flange portion protruding to an outer side in a radial direction of the shaft and is fixed to the shaft;
a magnet having a cylindrical shape, the magnet being disposed to face the stators; and
a magnetic collection yoke assembly including
a pair of magnetic collection yokes, disposed to overlap the flange portion of the stators with a gap in an axial direction of the shaft, for detecting a change in magnetic flux according to a relative positional change between the pair of the stators and the magnet, and
a Hall element outputting the change in magnetic flux detected by the magnetic collection yoke as an electric signal, and the magnetic collection yoke assembly being detachably attached to the housing, wherein
the housing includes a storage portion storing the magnetic collection yoke assembly,
the magnetic collection yoke assembly includes a plurality of movement restriction protrusions facing an inner wall of the storage portion,
a plurality of the movement restriction protrusions is disposed on each of both surfaces of the magnetic collection yoke assembly in the axial direction,
two movement restriction protrusions among a plurality of the movement restriction protrusions are disposed to be separated from each other in at least one direction of a length direction along the radial direction and a width direction that is a direction orthogonal to both the length direction and the axial direction on each of both surfaces of the magnetic collection yoke assembly in the axial direction, and
two movement restriction protrusions among a plurality of the movement restriction protrusions are disposed to be separated from each other in another direction, or at least one movement restriction protrusion of a plurality of the movement restriction protrusions extends longer in the another direction than in the one direction.

2. The torque sensor according to claim 1, wherein
the magnetic collection yoke assembly includes a magnetic collection yoke accommodation portion that accommodates the magnetic collection yoke, and
the movement restriction protrusions are disposed on the magnetic collection yoke accommodation portion.

3. The torque sensor according to claim 2, wherein the movement restriction protrusions are disposed to include regions at both ends in the length direction and regions at both ends in the width direction on both surfaces of the magnetic collection yoke accommodation portion in the axial direction.

4. The torque sensor according to claim 2, wherein on the magnetic collection yoke assembly, a sealing member that abuts on the inner wall of the storage portion is disposed on an outer side of the magnetic collection yoke accommodation portion in the radial direction.

5. The torque sensor according to claim 2, wherein
a plurality of the movement restriction protrusions disposed on both surfaces of the magnetic collection yoke assembly is disposed to be separated from each other at least in the length direction on each surface,
the magnetic collection yoke assembly includes a lid that covers an opening of the magnetic collection yoke accommodation portion formed on each of both sides of the magnetic collection yoke accommodation portion in the axial direction, and
the lid is disposed between the movement restriction protrusions separated from each other in the length direction.

6. The torque sensor according to any one of claims 1 to 5, wherein
at least some movement restriction protrusions of a plurality of the movement restriction protrusions face the inner wall while being separated from the inner wall of the storage portion, and
a maximum value of a distance H1 between the movement restriction protrusion and the inner wall is narrower than a distance H2 between the flange portion of the stators and the magnetic collection yoke.

7. The torque sensor according to any one of claims 1 to 5, wherein all the movement restriction protrusions of a plurality of the movement restriction protrusions abut on the inner wall of the storage portion.
